# FASCICULE DE BREVET EUROPEEN

(11) **EP 2 307 263 B1**
(45) Date de publication et mention de la délivrance du brevet: **22.02.2012**
(21) Numéro de dépôt: 09784385.8
(22) Date de dépôt: 14.05.2009
(51) Int. Cl.: B62D 65/02, B62D 65/18, B23Q 37/00

(54) **DISPOSITIF DE PRODUCTION D'AU MOINS DEUX TYPES DISTINCTS D'UNE CAISSE D'UN VEHICULE AUTOMOBILE**
VERFAHREN ZUR HERSTELLUNG VON MINDESTENS ZWEI VERSCHIEDENEN KAROSSERIETYPEN EINES KRAFTFAHRZEUGS
DEVICE FOR THE PRODUCTION OF AT LEAST TWO DIFFERENT TYPES OF MOTOR VEHICLE BODY

(30) Priorité: 01.07.2008 FR 0854441
(43) Date de publication de la demande: 13.04.2011
(73) Titulaire: Renault S.A.S., 92100 Boulogne-Billancourt (FR)
(72) Inventeur: ROBIN, Jean-francois, F-78990 Elancourt (FR); LEJEUNE, Vincent, F-78320 Levis Saint Nom (FR)
(86) Numéro de dépôt international: PCT/FR2009/050896
(87) Numéro de publication internationale: WO 2010/004146

(56) Documents cités:
- DE-U1- 29 813 669

## Description

L'invention concerne un dispositif de production d'au moins deux types distincts d'une caisse d'un véhicule automobile,

L'invention concerne plus particulièrement un dispositif de production d'au moins un premier type et un deuxième type d'une caisse d'un véhicule automobile, dispositif qui comporte :
- un premier poste de production pour la production du premier type de caisse du véhicule ;
- au moins un second poste de production pour la production du deuxième type de caisse du véhicule.

De façon générale, une ligne de production comporte a moins un poste de production qui est équipé par des moyens de production.

Le poste de production est par exemple un poste d'assemblage vers lequel est acheminée une caisse d'un véhicule à produire et les moyens de production sont par exemple constitués par une pluralité d'outils de soudage manuel pour l'assemblage de la caisse du véhicule.

Chaque poste de production comporte des moyens qui sont spécifiques à la production d'un type de caisse, par exemple des moyens de maintien en position et de mise en position spécifiques.

Il apparaît donc nécessaire de multiplier le nombre de postes de production afin de multiplier le nombre de types de caisse différents que la ligne de production est apte à produire.

Une telle multiplication du nombre de postes de production, comme décrite notamment dans le document DE-U-298 13 669, engendre un surcoût économique qui est dû notamment à la multiplication des ressources en main d'oeuvre et des moyens de production.

L'invention a pour but de proposer un dispositif de production qui permet de réduire ce surcoût et qui est apte à produire au moins deux types différents de caisse.

Dans ce but, l'invention propose un dispositif de production du type décrit précédemment, caractérisé en ce qu'il comporte une structure qui porte au moins un outil pour la production du premier type de caisse et du deuxième type de caisse, et en ce que ladite structure est montée mobile entre une première position dans laquelle ledit outil équipe le premier poste de production pour la production du premier type de caisse, et une seconde position dans laquelle ledit outil équipe le second poste de production pour la production du deuxième type de caisse.

Selon d'autres caractéristiques de l'invention :
- la structure comporte des moyens d'entraînement motorisés qui sont associés à des moyens de commande pour commander le déplacement de la structure mobile vers sa première position et vers sa seconde position ;
- le dispositif comporte au moins un rail de roulement supérieur qui coopère avec au moins un élément roulant complémentaire de la structure pour permettre le déplacement de la structure ;
- l'outil est un outil de soudage manuel pour l'assemblage desdites pièces par un opérateur ;
- la structure mobile comporte des moyens de suspension de l'outil qui sont montés articulés sur la structure, de sorte que l'outil est apte à être déplacé et immobilisé dans l'espace du poste de production associé ;
- les moyens de suspension comportent au moins un bras mécanique articulé et un palan ;
- chaque poste de production comporte un plancher qui est monté mobile entre une position horizontale dans laquelle un opérateur est apte à occuper une position de production, ou de travail, sur ledit plancher, et une position verticale de sécurité dans laquelle le plancher interdit l'accès au poste de travail associé ;
   - le premier poste de production comporte :
      -- un premier support pour la production du premier type de caisse,
      -- un deuxième support pour la production d'un troisième type de caisse,
      -- un premier dispositif d'interversion du premier et du deuxième support, comportant une broche d'axe central qui porte le premier support et le deuxième support, la broche étant montée pivotante autour de son axe central entre une première position dans laquelle le premier support occupe une position de production du premier type de caisse, et une deuxième position dans laquelle le deuxième support occupe une position de production du troisième type de caisse,
      et le second poste de production comporte :
      -- un troisième support pour la production du deuxième type de caisse,
      -- un quatrième support pour la production d'un quatrième type de caisse,
      -- un second dispositif d'interversion du troisième et du quatrième support, comportant une broche d'axe central qui porte le troisième support et le quatrième support, la broche étant montée pivotante autour de son axe central entre une première position dans laquelle le troisième support occupe une position de production du deuxième type de caisse, et une deuxième position dans laquelle le quatrième support occupe une position de production du quatrième type de caisse ;
- chacun desdits types de caisse à produire comporte une pluralité de pièces à assembler entre elles, chaque support comporte des moyens de fixation et/ou de mise en position desdites pièces à assembler.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique qui illustre un dispositif de production selon l'invention comportant un premier et un second poste de production et une structure mobile dans une première position ;
- la figure 2 est une vue similaire à celle de la figure 1, qui illustre la structure mobile de la figure 1 dans une seconde position.

Les éléments identiques, similaires ou analogues de l'invention seront désignés par les mêmes chiffres de référence.

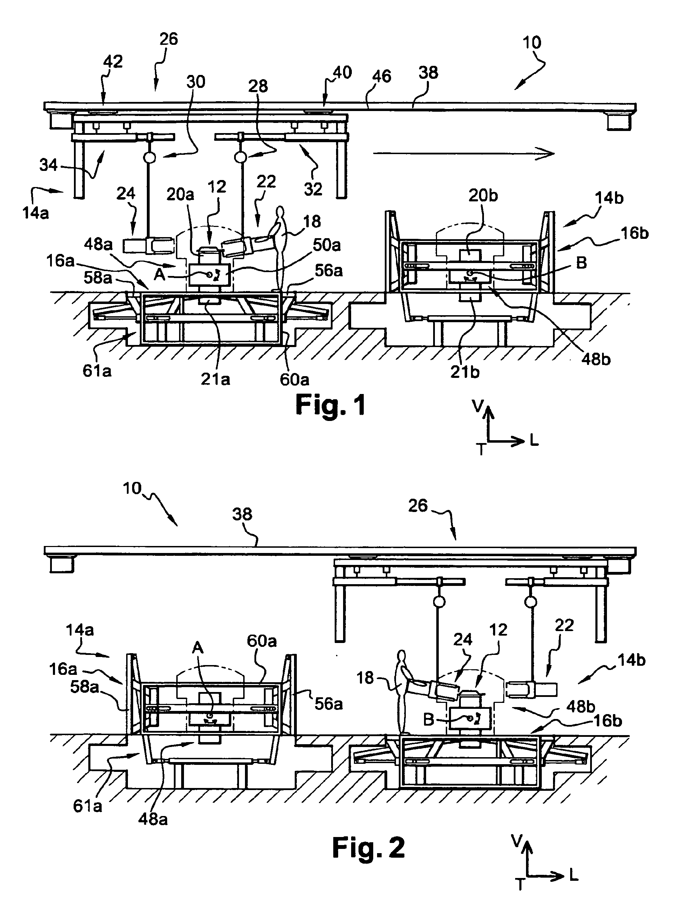

On utilisera à titre non limitatif les termes avant et arrière en référence à la partie gauche et à la partie droite respectivement de la figure 1, et les orientations longitudinale, verticale et transversale selon le trièdre L, V, T représenté aux figures.

On a représenté à la figure 1 un dispositif de production 10 qui équipe une ligne de production (non représentée).

Le dispositif de production 10 permet de produire une pluralité de types d'une partie d'une caisse d'un véhicule automobile, cette partie de caisse étant ici un côté de caisse 12 du véhicule.

Le dispositif de production 10 est ici un dispositif d'assemblage par soudage manuel d'une pluralité de pièces qui constituent chaque type de côté de caisse 12.

A cet effet, le dispositif de production 10 comporte un premier poste 14a de production pour la production d'un premier type de côté de caisse 12 et un second poste 14b de production, qui est accolé au premier poste 14a, pour la production d'un deuxième type de côté de caisse 12.

Le premier poste 14a de production est représenté à gauche des figures 1 et 2, et le second poste 14b de production est représenté à droite des figures 1 et 2.

Le premier poste 14a et le second poste 14b de production sont similaires et des éléments identiques sont désignés par les mêmes références indicées "a" pour le premier poste 14a ou "b" pour le second poste 14b.

Afin de ne pas alourdir la description, seul le premier poste 14a de production sera décrit en détail.

Le premier poste 14a de production comporte un plancher 16a sur lequel un opérateur 18 est apte à se déplacer et à occuper une position de production.

Le premier poste 14a comporte un premier support 20a pour la production d'un premier type de côté de caisse 12.

Le premier support 20a comporte une plaque horizontale de référence, comme un marbre (non représenté), sur lequel sont fixés des moyens de maintien en position (non représentés) et des moyens de mise en position (non représentés) des pièces qui constituent le premier type de côté de caisse 12 à assembler.

Le trait discontinu qui entoure le premier support 20a aux figures 1 et 2 représente schématiquement le volume que peut représenter le support 20a.

Le premier support 20a est représenté à la figure 1 dans une position de production, dans laquelle les pièces du premier type de côté de caisse 12 sont aptes à être fixées et mises en position par rapport au marbre de référence du support 20a, de sorte que l'opérateur 18 est apte à les souder.

A cet effet, le premier poste 14a de production est équipé d'un premier outil de soudage 22 qui est suspendu à une structure 26 porteuse dans une position de production, dans laquelle l'opérateur 18 est apte à utiliser le premier outil de soudage 22 pour assembler les pièces présentes sur le premier poste de production 14a.

De même, le premier poste 14a de production est équipé d'un second outil de soudage 24 qui est suspendu à la structure 26 porteuse dans une position de production dans laquelle l'opérateur 18, ou un second opérateur (non représenté), est apte à utiliser le second outil de soudage 24 pour assembler les pièces présentent sur le premier poste de production 14a.

Le premier et le second outils de soudage 22, 24 sont agencés de part et d'autre du côté de caisse 12 à produire, de sorte que le premier opérateur 18 et le second opérateur peuvent travailler conjointement et simultanément en vis à vis sur le même côté de caisse 12 à assembler.

Le premier et le second outils 22, 24 sont suspendus à la structure 26 au moyen d'un premier palan 28 et d'un second palan 30 respectivement, chaque palan 28, 30 étant apte à entraîner verticalement vers le haut ou vers le bas l'outil 22, 24 associé.

Le premier palan 28 et le second palan 30 sont montés de façon mobile sur la structure 26, ici au moyen d'un premier bras mécanique 32 et d'un second bras mécanique 34 respectivement.

L'extrémité libre de chaque bras mécanique 32, 34 porte le palan 28, 30 associé.

Enfin, le premier bras mécanique 32 et le second bras mécanique 34 sont montés pivotant sur la structure 26 porteuse et sont télescopique.

Ainsi, les deux bras mécanique 32, 34 et les deux palans 28, 30 constituent des moyens de suspension de l'outil 22, 24 associé, ces moyens de suspension étant aptes à occuper une pluralité de positions de sorte que les outils 22, 24 associés sont aptes à être déplacés et immobilisés dans l'espace du premier poste 14a de production associé.

La structure 26 est montée mobile longitudinalement entre une première position, illustrée à la figure 1, dans laquelle la structure 26 chapeaute le premier poste 14a de production de - sorte que le premier et le second outils 22, 24 équipent le premier poste 14a pour la production du premier type de côté de caisse 12, et une seconde position, représentée à la figure 2, dans laquelle la structure 26 chapeaute le second poste 14b de production de sorte que le premier et le second outils 22, 24 équipent le second poste 14b pour la production du deuxième type de côté de caisse 12.

Le dispositif de production 10 comporte au moins un rail 38 supérieur de roulement qui coopère avec un premier palier 40 et un second palier 42 complémentaires de la structure 26 porteuse pour permettre le déplacement de la structure 26.

Chaque palier 40, 42 comporte des moyens de roulement qui sont aptes à coopérer avec une portion complémentaire du rail 38.

A cet effet, le rail 38 est un rail longitudinal profilé, ici de section du type en T inversé, dont une branche inférieure 46 horizontale constitue une piste de roulement pour les moyens de roulement de chaque palier 40, 42.

La structure 26 comporte des moyens d'entraînement motorisés (non représentés) qui sont associés à des moyens de commande pour commander le déplacement de la structure 26 porteuse entre sa première position et sa seconde position.

Ainsi, l'opérateur 18 est apte à commander le déplacement de la structure 26 porteuse, par exemple par appui sur un bouton d'un pupitre de commande.

Selon un autre aspect, le premier poste 14a de production comporte un deuxième support 21 a pour la production d'un troisième type de côté de caisse (non représenté).

De même que le premier support 20a, le deuxième support 21a comporte un marbre de référence, sur lequel sont fixés des moyens de maintien en position (non représentés) et de mise en position (non représentés) d'une pluralité de pièces qui constituent le deuxième type de côté de caisse à assembler.

Le deuxième support 21a est représenté à la figure 1 dans une position escamotée, dans laquelle le deuxième support 21 a est agencé au dessous du plancher 16a.

Le premier poste 14a de production comporte un premier dispositif d'interversion 48a, qui permet d'intervertir la position du premier support 20a avec celle du deuxième support 21 a, de sorte que le deuxième support 21 a occupe une position de production et que le premier support 20a occupe alors une position escamotée.

A cet effet, le premier dispositif d'interversion 48a comporte une broche 50a qui est ici constituée par une structure métallique parallélépipédique transversale et qui présente un axe central A.

L'axe central A est un axe de symétrie de la broche 50a du dispositif d'inversion 48a.

La broche 50a comporte une première portion supérieure axiale qui porte et qui verrouille le premier support 20a.

Par symétrie selon l'axe A, la broche 50a comporte une seconde portion inférieure axiale qui porte et qui verrouille le deuxième support 21a.

La broche 50a est montée pivotante autour de son axe central A, par incrément d'un demi tour, entre une première position dans laquelle le premier support 20a occupe sa position de production, le deuxième support 21a occupant alors sa position escamotée, et une deuxième position dans laquelle le deuxième support 21 a occupe sa position de production, le premier support 20a occupant alors sa position escamotée.

La broche 50a est ici entraînée en pivotement au moyen d'un moteur électrique (non représenté).

Afin de permettre le pivotement de la broche 50a et des deux supports 20a, 21 a associés, le plancher 16a du premier poste 14a de production est monté mobile.

A cet effet, le plancher 16a est constitué d'une première plaque 56a et d'une seconde plaque 58a qui sont agencées de part et d'autre de la broche 50a.

Chaque plaque 56a, 58a du plancher 16a est montée mobile entre une position horizontale, représentée à la figure 1, dans laquelle l'opérateur 18 est apte à occuper une position de production, ou de travail, sur le plancher 16a, et une position verticale de sécurité, représentée à la figure 2, dans laquelle le plancher 16a interdit l'accès au premier poste de travail 14a associé.

Pour compléter l'interdiction de l'accès au premier poste de production 14a, une première barrière 60a et une seconde barrière (non représentée) qui sont agencées à une première extrémité et à une seconde extrémité respectivement du premier poste de production 14a.

Les barrières du premier poste de production 14a sont entraînées depuis une position escamotée, représentée à la figure 1, jusqu'à une position de sécurité, représentée à la figure 2.

A cet effet, le premier poste de production 14a comporte un mécanisme motorisé 61a pour l'entraînement en déplacement des barrières.

Avant le pivotement de la broche 50a et après le retrait de l'opérateur 18 du premier poste de production 14a, chaque plaque 56a, 58a du plancher 16a est entraînée depuis sa position horizontale jusqu'à sa position verticale de sécurité, illustrée à la figure 2, afin d'interdire l'accès au premier poste de production 14a.

Dans cette position verticale de sécurité, les plaques 56a, 58a du plancher 16a libèrent un espace pour permettre le passage des deux supports 24a, 24b au cours du pivotement de la broche 50a.

De la même manière, le second poste 14b de production comporte un troisième support 20b pour la production du deuxième type de côté de caisse (non représenté) et un quatrième support 21 b pour la production d'un quatrième type de côté de caisse (non représenté).

Aussi, le second poste 14b de production comporte un second dispositif d'interversion 48b qui permet d'intervertir la position du troisième support 20b avec celle du quatrième support 21b au moyen d'une second broche 50b qui est montée pivotante autour d'un axe central B.

Pour les raisons évoquées précédemment, le second poste 14b de production n'est pas décrit en détail.

Ainsi, le dispositif 10 de production permet de produire quatre types différents de caisse au moyen de deux postes de production 14a, 14b et d'un même jeu d'outils.

A titre non limitatif, chaque poste de production 14a, 14b peut être équipé d'un nombre d'outil de soudage variable, par exemple de un à huit outils.

De même, chaque poste de production est apte à accueillir autant d'opérateurs qu'il y a d'outils.

Aussi, les outils 22, 24 sont indifféremment aptes à produire un ou plusieurs types différents de partie de caisse.

De plus, le premier bras mécanique 32 et le second bras mécanique 34, et/ou le premier palan 28 et le second palan 30 sont motorisés et associés à des moyens de commande en déplacement.

## Revendications

1. Dispositif (10) de production d'au moins un premier type et un deuxième type d'une caisse (12) d'un véhicule automobile, dispositif qui comporte :
- un premier poste de production (14a) pour la production du premier type de caisse du véhicule ;
- au moins un second poste de production (14b) pour la production du deuxième type de caisse du véhicule,
- le dispositif (10) comporte une structure (26) qui porte au moins un outil (22) pour la production du premier type de caisse et du deuxième type de caisse **caractérisé en ce que** ladite structure (26) est montée mobile entre une première position dans laquelle ledit outil (22) équipe le premier poste de production (14a) pour la production du premier type de caisse, et une seconde position dans laquelle ledit outil (22) équipe le second poste de production (14b) pour la production du deuxième type de caisse.

2. Dispositif (10) de production selon la revendication 1, **caractérisé en ce que** la structure (26) comporte des moyens d'entraînement motorisés qui sont associés à des moyens de commande pour commander le déplacement de la structure (26) mobile vers sa première position et vers sa seconde position.

3. Dispositif (10) de production selon l'une quelconque des revendications précédentes, **caractérisé en ce que** le dispositif (10) comporte au moins un rail (38) de roulement supérieur qui coopère avec au moins un élément (40) roulant complémentaire de la structure (26) pour permettre le déplacement de la structure (26).

4. Dispositif (10) de production selon l'une quelconque des revendications précédentes, **caractérisé en ce que** ledit outil (22) est un outil de soudage manuel pour l'assemblage desdites pièces par un opérateur (18).

5. Dispositif (10) de production selon l'une quelconque des revendications précédentes, **caractérisé en ce que** la structure (26) mobile comporte des moyens de suspension (28, 32) de l'outil (22) qui sont montés articulés sur la structure (26), de sorte que l'outil (22) est apte à être déplacé et immobilisé dans l'espace du poste de production (14a) associé.

6. Dispositif de production selon la revendication précédente, **caractérisé en ce que** les moyens de suspension (28, 32) comportent au moins un bras mécanique (32) articulé et un palan (28).

7. Dispositif (10) de production selon l'une quelconque des revendications précédentes, **caractérisé en ce que** chaque poste de production (14a, 14b) comporte un plancher (16a, 16b) qui est monté mobile entre une position horizontale dans laquelle un opérateur (18) est apte à occuper une position de production, ou de travail, sur ledit plancher, et une position verticale de sécurité dans laquelle le plancher (16a, 16b) interdit l'accès au poste de travail (14a, 14b) associé.

8. Dispositif (10) de production selon l'une quelconque des revendications précédentes, **caractérisé en ce que** le premier poste de production (14a) comporte :
- un premier support (20a) pour la production du premier type de caisse,
- un deuxième support (21a) pour la production d'un troisième type de caisse,
- un premier dispositif d'interversion (48a) du premier et du deuxième support (20a, 21a), comportant une broche (50a) d'axe central (A) qui porte le premier support (20a) et le deuxième support (21a), la broche (50a) étant montée pivotante autour de son axe central (A) entre une première position dans laquelle le premier support (20a) occupe une position de production du premier type de caisse, et une deuxième position dans laquelle le deuxième support (21a) occupe une position de production du troisième type de caisse,
et **en ce que** le second poste de production (14b) comporte :
- un troisième support (20b) pour la production du deuxième type de caisse,
- un quatrième support (21b) pour la production d'un quatrième type de caisse,
- un second dispositif d'interversion (48b) du troisième et du quatrième support (20b, 21b), comportant une broche (50b) d'axe central (B) qui porte le troisième support (20b) et le quatrième support (21 b), la broche (50b) étant montée pivotante autour de son axe central (B) entre une première position dans laquelle le troisième support (20b) occupe une position de production du deuxième type de caisse, et une deuxième position dans laquelle le quatrième support (21b) occupe une position de production du quatrième type de caisse.

9. Dispositif (10) de production selon la revendication précédente, **caractérisé en ce que** chacun desdits types de caisse à produire comporte une pluralité de pièces à assembler entre elles, et **en ce que** chaque support (20a, 21a, 20b, 21b) comporte des moyens de fixation et/ou de mise en position desdites pièces à assembler.

## Claims

1. Device (10) for producing at least a first type and a second type of body (12) of a motor vehicle, which device comprises:
- a first production station (14a) for producing the first type of body of the vehicle;
- at least one second production station (14b) for producing the second type of body of the vehicle,
- the device (10) comprises a structure (26) which carries at least one tool (22) for producing the first type of body and the second type of body, **characterized in that** said structure (26) is mounted so that it can move between a first position in which said tool (22) equips the first production station (14a) for producing the first type of body, and a second position in which said tool (22) equips the second production station (14b) for producing the second type of body.

2. Production device (10) according to Claim 1, **characterized in that** the structure (26) comprises motorized driving means which are associated with control means for controlling the displacement of the movable structure (26) into its first position and into its second position.

3. Production device (10) according to either one of the preceding claims, **characterized in that** the device (10) comprises at least one upper running rail (38) which interacts with at least one complementary rolling element (40) of the structure (26) to allow the displacement of the structure (26).

4. Production device (10) according to any one of the preceding claims, **characterized in that** said tool (22) is a manual welding tool for the assembly of said pieces by an operator (18).

5. Production device (10) according to any one of the preceding claims, **characterized in that** the movable structure (26) comprises suspension means (28, 32) for the tool (22) which are mounted in an articulated fashion on the structure (26) so that the tool (22) is able to be displaced and immobilized in the space of the associated production station (14a).

6. Production device according to the preceding claim, **characterized in that** the suspension means (28, 32) comprise at least one articulated mechanical arm (32) and a hoist (28).

7. Production device (10) according to any one of the preceding claims, **characterized in that** each production station (14a, 14b) comprises a floor (16a, 16b) which is mounted so that it can move between a horizontal position in which an operator (18) is able to occupy a production or working position, on said floor, and a vertical safety position in which the floor (16a, 16b) prevents access to the associated work station (14a, 14b).

8. Production device (10) according to any one of the preceding claims, **characterized in that** the first production station (14a) comprises:
- a first support (20a) for producing the first type of body,
- a second support (21a) for producing a third type of body,
- a first switching device (48a) for switching the first and second support (20a, 21a), comprising a spindle (50a) with a central axis (A) which carries the first support (20a) and the second support (21a), the spindle (50a) being mounted so that it can pivot about its central axis (A) between a first position in which the first support (20a) occupies a position for producing the first type of body, and a second position in which the second support (21a) occupies a position for producing the third type of body,
and **in that** the second production station (14b) comprises:
- a third support (20b) for producing the second type of body,
- a fourth support (21b) for producing a fourth type of body,
- a second switching device (48b) for switching the third and fourth support (20b, 21b), comprising a spindle (50b) with a central axis (B) which carries the third support (20b) and the fourth support (21b), the spindle (50b) being mounted so that it can pivot about its central axis (B) between a first position in which the third support (20b) occupies a position for producing the second type of body, and a second position in which the fourth support (21b) occupies a position for producing the fourth type of body.

9. Production device (10) according to the preceding claim, **characterized in that** each of said body types to be produced comprises a plurality of pieces to be assembled together, and **in that** each support (20a, 21a, 20b, 21b) comprises means for fixing and/or positioning said pieces to be assembled.

## Patentansprüche

1. Vorrichtung (10) zur Herstellung mindestens eines ersten und eines zweiten Typs einer Karosserie (12) eines Kraftfahrzeugs, wobei die Vorrichtung Folgendes umfasst:
- eine erste Fertigungsstation (14a) zur Herstellung des ersten Karosserietyps des Fahrzeugs;
- mindestens eine zweite Fertigungsstation (14b) zur Herstellung des zweiten Karosserietyps des Fahrzeugs,
- wobei die Vorrichtung (10) eine Struktur (26) umfasst, die mindestens ein Werkzeug (22) zur Herstellung des ersten Karosserietyps und des zweiten Karosserietyps umfasst, **dadurch gekennzeichnet, dass** die Struktur (26) zwischen einer ersten Position, in der das Werkzeug (22) an der ersten Fertigungsstation (14a) zur Herstellung des ersten Karosserietyps vorgesehen ist, und einer zweiten Position, in der das Werkzeug (22) an der zweiten Fertigungsstation (14b) zur Herstellung des zweiten Karosserietyps vorgesehen ist, beweglich angebracht ist.

2. Herstellungsvorrichtung (10) nach Anspruch 1, **dadurch gekennzeichnet, dass** die Struktur (26) motorisierte Antriebsmittel umfasst, die Betätigungsmitteln zur Aktivierung der Verschiebung der beweglichen Struktur (26) in die erste Position und in die zweite Position zugeordnet sind.

3. Herstellungsvorrichtung (10) nach einem der vorhergehenden Ansprüche, **dadurch gekennzeichnet, dass** die Vorrichtung (10) mindestens eine obere Laufschiene (38) umfasst, die mit mindestens einem komplementären Rollelement (40) der Struktur (26) zusammenwirkt, um das Verschieben der Struktur (26) zu gestatten.

4. Herstellungsvorrichtung (10) nach einem der vorhergehenden Ansprüche, **dadurch gekennzeichnet, dass** das Werkzeug (22) ein Handschweißwerkzeug zur Montage der Teile durch einen Bediener (18) ist.

5. Herstellungsvorrichtung (10) nach einem der vorhergehenden Ansprüche, **dadurch gekennzeichnet, dass** die bewegliche Struktur (26) Mittel (28, 32) zum Aufhängen des Werkzeugs (22) umfasst, die an der Struktur (26) angelenkt sind, so dass das Werkzeug (22) in dem Raum der zugehörigen Fertigungsstation (14a) bewegt und angehalten werden kann.

6. Herstellungsvorrichtung nach dem vorhergehenden Anspruch, **dadurch gekennzeichnet, dass** die Aufhängungsmittel (28, 32) mindestens einen angelenkten mechanischen Arm (32) und einen Hebezug (28) umfassen.

7. Herstellungsvorrichtung (10) nach einem der vorhergehenden Ansprüche, **dadurch gekennzeichnet, dass** jede Fertigungsstation (14a, 14b) einen Boden (16a, 16b) umfasst, der zwischen einer horizontalen Position, in der ein Bediener (18) eine Herstellungs- oder Arbeitsposition auf dem Boden einnehmen kann, und einer vertikalen Sicherheitsposition, in der der Boden (16a, 16b) Zugang zu der zugehörigen Arbeitsstation (14a, 14b) verhindert, beweglich angebracht ist.

8. Herstellungsvorrichtung (10) nach einem der vorhergehenden Ansprüche, **dadurch gekennzeichnet, dass** die erste Fertigungsstation (14a) Folgendes umfasst:
- einen ersten Träger (20a) zur Herstellung des ersten Karosserietyps,
- einen zweiten Träger (21a) zur Herstellung eines dritten Karosserietyps,
- eine erste Vorrichtung (48a) zur Umkehr des ersten und des zweiten Trägers (20a, 21a), die einen Zapfen (50a) mit einer mittleren Achse (A) umfasst, der den ersten Träger (20a) und den zweiten Träger (21a) trägt, wobei der Zapfen (50a) um seine mittlere Achse (A) zwischen einer ersten Position, in der der erste Träger (20a) eine Position zur Herstellung des ersten Karosserietyps einnimmt, und einer zweiten Position, in der der zweite Träger (21a) eine Position zur Herstellung des dritten Karosserietyps einnimmt, schwenkbar angebracht ist,
und dass die zweite Fertigungsstation (14b) Folgendes umfasst:
- einen dritten Träger (20b) zur Herstellung des zweiten Karosserietyps,
- einen vierten Träger (21b) zur Herstellung eines vierten Karosserietyps,
- eine zweite Vorrichtung (48b) zur Umkehr des dritten und des vierten Trägers (20b, 21b), die einen Zapfen (50b) mit einer mittleren Achse (B) umfasst, der den dritten Träger (20b) und den vierten Träger (21b) trägt, wobei der Zapfen (50b) um seine mittlere Achse (B) zwischen einer ersten Position, in der der dritte Träger (20b) eine Position zur Herstellung des zweiten Karosserietyps einnimmt, und einer zweiten Position, in der der vierte Träger (21b) eine Position zur Herstellung des vierten Karosserietyps einnimmt, schwenkbar angebracht ist.

9. Herstellungsvorrichtung (10) nach dem vorhergehenden Anspruch, **dadurch gekennzeichnet, dass** jeder der herzustellenden Karosserietypen mehrere aneinanderzumontierende Teile umfasst und dass jeder Träger (20a, 21a, 20b, 21b) Mittel zur Befestigung und/oder zur Positionierung der zu montierenden Teile umfasst.
